# EUROPEAN PATENT SPECIFICATION

(11) **EP 2 940 290 B1**
(45) Date of publication and mention of the grant of the patent: **14.08.2019**
(21) Application number: 14290125.5
(22) Date of filing: 29.04.2014
(51) Int. Cl.: F03B 3/18

(54) **Hydraulic machine, preferably hydraulic turbine, and installation for converting hydraulic energy comprising such a turbine**
Hydraulische Maschine, vorzugsweise eine hydraulische Turbine und Anlage zur Umwandlung hydraulischer Energie mit einer solchen Turbine
Machine hydraulique, de préférence une turbine hydraulique et installation pour convertir l'énergie hydraulique comprenant une telle turbine

(43) Date of publication of application: 04.11.2015
(73) Proprietor: GE Renewable Technologies, 38100 Grenoble (FR)
(72) Inventor: Bertea, Jean-Francois, 07300 Saint Jean De Muzols (FR); Bremond, Jacques, 38120 Saint-Egreve (FR)
(74) Representative: Moutard, Pascal Jean

(56) References cited:
- WO-A1-2013/182210
- DE-A1- 3 429 288
- US-A- 4 383 798

## Description

The invention relates to a hydraulic machine, preferably a hydraulic turbine. The invention also relates to an installation for converting hydraulic energy into mechanical or electrical energy that comprises such a turbine.

In particular, the invention may be applied to turbines that include a distributor with adjustable guide blades, such as double-regulated turbines. The adjustable guide blades are generally called guide vanes or wicket gates. For instance, the invention can be implemented on bulb turbines and propeller turbines. Alternatively, the invention may be applied to other hydraulic machines, under certain water fall conditions.

In the technical field of hydraulic energy conversion, it is known to equip a turbine with a distributor having adjustable guide blades, so as to adapt the flow rate of water circulating around the runner of the turbine. In practice, the guide blades are all swiveled at the same time by means of a gate operating ring, also called regulating ring, that is linked to a control lever of each guide blade.

A servomotor usually allows pivoting the gate operating ring in one direction, while a counterweight (when the turbine has a horizontal rotation axis) or the same servomotor enables pivoting the gate operating ring in the other direction. The servomotor is adapted to open the guide blades, so as to increase the flow rate of water circulating around the runner. The same servomotor or the counterweight allows closing the guide blades, thereby reducing the flow rate of water circulating around the runner. In practice, this servomotor is electronically piloted by a regulation unit that collects the pressure upstream and downstream of the turbine, and other parameters such as power, rotation speed... In this way, the regulation unit commands the servomotor to adjust the orientation of the guide blades in function of the height of the water fall (also called water head), of the power of the installation, and in some cases, of the speed of the unit (isolated network).

It is known that the water flow circulating through the turbine applies a momentum on each guide blade. In function of the degree of openness of the guide blades, this momentum helps opening or closing the guide blades. More precisely, there is a barrier at which the momentum changes direction. When the guide blades are opened further to this barrier, the momentum is opposed to closing the guide blades.

The runner of the turbine is mechanically coupled to a generator that acts as a brake to deliver electricity at the proper frequency to an electric network.

When designing a hydroelectricity plant, it is important to take into account the dysfunctions that can arise in operation. One of the dysfunctions is when the turbine is disconnected from the main electrical grid. This happens for example when a circuit breaker is accidently opened. As a result, the generator is not submitted anymore to a resisting torque and the rotating parts of the unit, usually including generator rotor and turbine runner mechanically connected by a shaft, accelerates. This is called "overspeeding" until the speed stabilizes at runaway speed.

It is then imperative to shut down the circulation of water through the turbine, by closing the distributor. In practice, distributor starts to close as soon as the unit speed increases or the generator stops generating power, and runaway is not reached. However, in case of an accident preventing the control system to detect these phenomena, said control system could send wrong information, opening the distributor instead of closing. In that case, turbine could reach conditions where the guide vanes would be submitted to high opening hydraulic torques, or where conditions would be dangerous for the safety of the unit.

The servomotor or the counterweight that is used to close the distributor is then oversized and very expensive. Some installations are equipped with upstream or downstream valves or gates, which are able to cut the flow inside the turbine runner and stop the unit, but others must be stopped by the distributor alone.

Patent publication WO2013/182210 discloses a mobile distributor wherein, in addition to the traditional control system enabled by a gate ring coupled to the guide vanes to adjust their opening angle such to control the amount of water flowing through the machinery, the control of the radius of installation of the guide vanes achieved by means of a system of two servomotors acting in a synchronized fashion on eccentric bearings associated to each guide vane.

Patent publication US 4 383 798 discloses a common mounting base plate secured to a turbine gallery floor including a pair of servomotors which are connected to operate a wicket gate operator ring. In particular, the arrangement is such that the servomotors are angularly positioned to clear the gate ring counterweight.

The invention intends to solve these drawbacks by proposing a hydraulic machine having a lighter counterweight or a less powerful servomotor and improving the chances to remain in conditions where the unit behavior is safer.

To this end, the invention concerns a hydraulic machine, preferably a hydraulic turbine, comprising a runner, adapted to rotate under the height of a water fall, a distributor with adjustable guide blades and a first electronically piloted servomotor to open the guide blades, According to the invention, the first servomotor is not able to open the guide blades further to a predetermined position, and the hydraulic machine includes a second servomotor, which is mechanically piloted by the height of the water fall and which is adapted to open the guide blades further to the predetermined position in low water fall conditions.

Thanks to the invention, the first servomotor cannot open the guide blades further to the predetermined position, over which an important counterweight is needed to counterbalance the strength of the water flow. Therefore, an "overspeeding" of the hydraulic machine or a malfunctioning of the control system cannot lead to open the guide blades in dangerous zones, where it is hard to close the distributor under high water fall conditions. Nevertheless, the guide blades may be opened further to the predetermined position to obtain a maximum flow rate in low water fall conditions. This further opening is performed by the second servomotor that acts independently from control system and that is piloted by the height of the water fall.

Further aspects of the invention which are advantageous but not compulsory are specified below:
- The second servomotor is piloted by the pressure difference between the pressure upstream of the hydraulic machine and the pressure downstream of the hydraulic machine.
- The second servomotor is supplied with water extracted upstream and downstream of the hydraulic machine.
- The second servomotor is operated with oil injection, at a pressure depending on the pressure difference between the pressure upstream and the pressure downstream of the hydraulic machine.
- The second servomotor is configured to open the guide blades further to the predetermined position when the pressure difference between the pressure upstream of the hydraulic machine and the pressure downstream of the hydraulic machine falls below a certain value.
- The first and the second servomotor are hydraulic jacks.
- The first servomotor is arranged above the second servomotor and includes a piston body that is integral in translation with a piston of the second servomotor.
- The second servomotor includes a chamber that is supplied with oil at a pressure depending on the pressure difference between the pressure upstream of the hydraulic machine and the pressure downstream of the hydraulic machine.
- The hydraulic machine includes a controller, adapted to increase the pressure of oil injected in the chamber of the second servomotor when the pressure difference between the pressure upstream of the hydraulic machine and the pressure downstream of the hydraulic machine falls below a certain value.
- The second servomotor includes a first chamber and a second chamber and the first chamber is supplied with water extracted downstream of the hydraulic machine while the second chamber is supplied with water extracted upstream of the hydraulic machine.
- The second servomotor includes means for pushing its piston that are sized to push the piston and open the guide blades further to the predetermined position when the pressure difference between the pressure upstream of the hydraulic machine and the pressure downstream of the hydraulic machine falls below a certain value.
- The means for pushing the piston of the second servomotor includes a spring.
- The degree of openness of the guide blades at the predetermined position is below or equal to that of a position at which the momentum applied by water on the guide blades during runaway becomes higher than the maximum opening torque obtained during normal operation.
- At the predetermined position, water circulating through the hydraulic machine still helps closing the guide blades.
- The hydraulic machine includes a counterweight for closing the guide blades.

The invention also concerns an installation for converting hydraulic energy into mechanical or electrical energy comprising a hydraulic machine as defined previously.

The invention will now be explained in correspondence with the figures, and as an illustrative example, without restricting the object of the invention. In the figures:
- figure 1 is a longitudinal section of an installation for converting hydraulic energy, comprising a hydraulic machine according to the invention, of the bulb turbine type,
- figure 2 is an enlarged view of a mechanism for controlling guide blades of the turbine of figure 1,
- figure 3 is a section, illustrating half of a gate operating ring that controls the position of the guide blades, two servomotors to open the guide blades and a counterweight to close the guide blades, and
- figure 4 is a scheme representing the two servomotors of figure 3 in low and high water fall configurations.

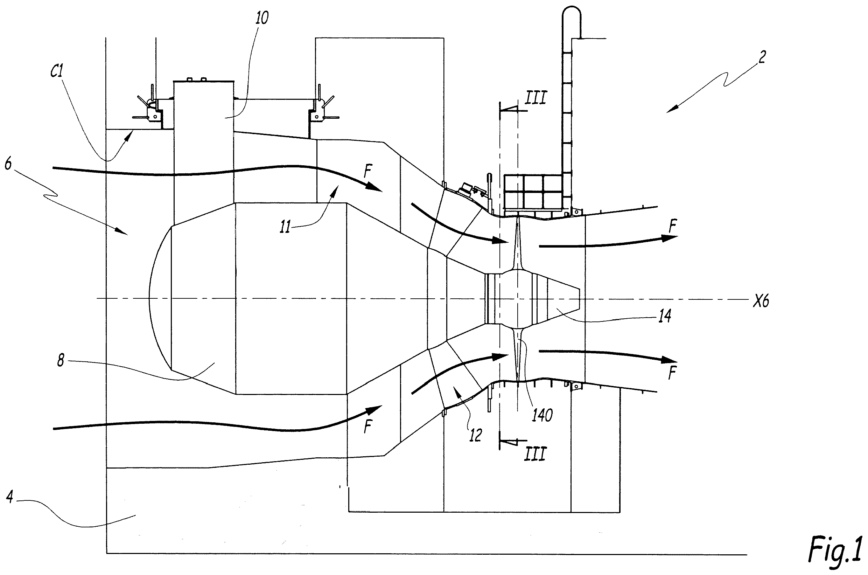

Figure 1 shows an installation 2 for converting hydraulic energy into electrical energy. The installation 2 includes a concrete structure 4 that delimits a channel C1 of circulation of water. A hydraulic machine, more precisely a bulb turbine 6, is disposed within the channel C1. The bulb turbine 6 is adapted to rotate around a horizontal rotation axis X6 under the action of a forced water flow F coming from a non-represented reservoir. This reservoir may be formed by a non-represented dam built across a waterway, such as a river.

The bulb turbine 6 is adapted to low water fall and high flow rate conditions. It includes a bulb casing 8 that is supported within channel C1 by a bulb hanger 10 and stay vanes 11. The bulb turbine 6 includes a runner 14 comprising a plurality of runner blades 140. The runner blades 140 have an adjustable pitch. The runner 14 is coupled to a non-represented generator which is disposed within the bulb casing 8 and which delivers an alternative voltage to a non-represented electricity power grid. The generator acts as a brake on the runner 14 so as to deliver a voltage at a certain frequency.

The bulb turbine 6 also includes a distributor 12 that is arranged upstream of the runner blades 140. The distributor 12 is configured to adapt the flow rate of water circulating between the runner blades 140 so as to control the power delivered by the runner 14. The distributor 12 is piloted to reduce the flow rate in high water fall conditions and obtain a maximal flow rate in low water fall conditions so that the runner 14 delivers the maximum power in relation to the capacity of the generator regardless of the water head.

The distributor 12 includes a plurality of guide blades 120 that are evenly distributed around the bulb casing 8 and that have each an adjustable pitch. Therefore, the bulb turbine 6 is a double-regulated turbine because it is possible to adjust both the orientation of the runner blades 140 and the orientation of the guide blades 120.

The guide blades 120 are each pivotable around an axis Y120 between a closed position where the guide blades 120 are substantially perpendicular to the water flow F and block the circulation of water downstream of the distributor 12 and an opened position, where the guide blades 120 are oriented substantially parallel to the water flow F and oppose a very low resistance to the circulation of water. Consequently, the flow rate in the opened position is maximal.

In the present document, the action of opening the guide blades 120 consists in orientating the guide blades 120 so as to set them more parallel to the water flow direction F. Conversely, the action of closing the guide blades 120 consists in orientating the guide blades 120 so as to set them more perpendicular to the water flow direction F.

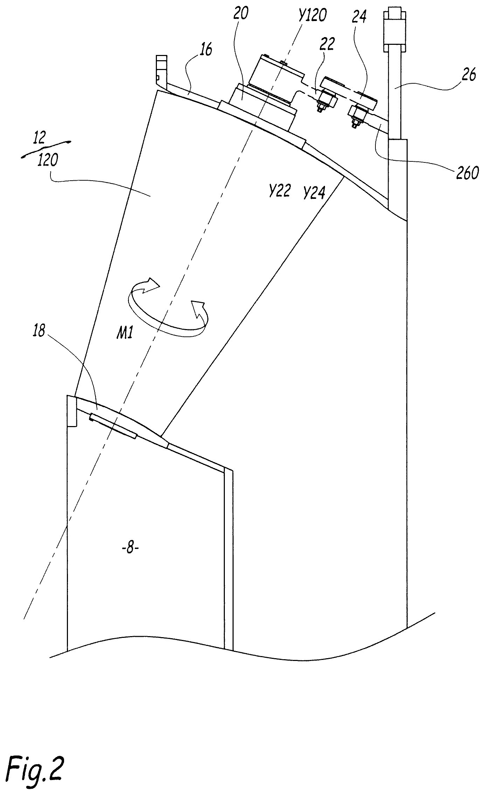

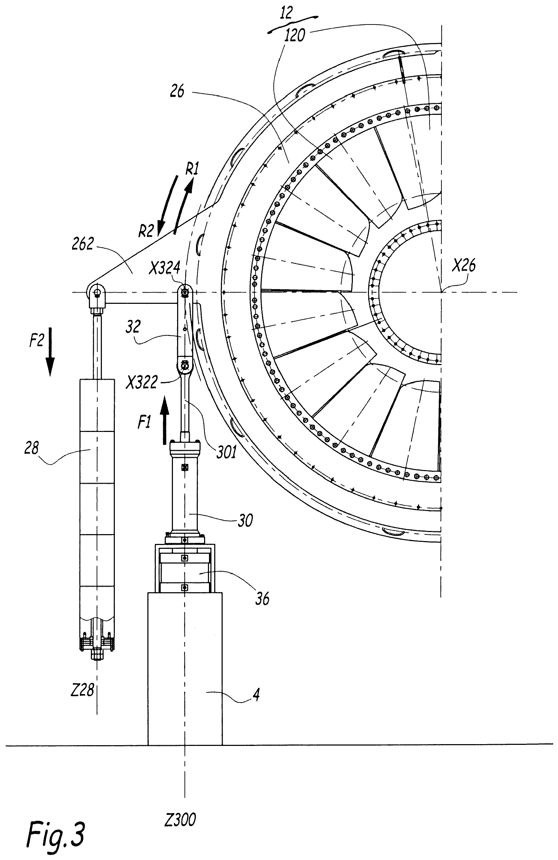

As shown on figures 2 and 3, the bulb turbine 6 includes a gate operating ring 26 to swivel the guide blades 120 all at the same time. The guide blades 120 are each arranged between a radially external cover 16 and a radially inner cover 18. The inner cover 18 is fixedly attached to the bulb casing 8. The gate operating ring 26 is centered on an axis of rotation X26 that is superimposed upon the axis of rotation X6. The gate operating ring 26 is rotatably mounted around the upper cover 16 and includes coupling portions 260 that are linked to the control lever 22 of each blade 120. More precisely, each control lever 22 is connected to a trunnion 20 that is fixedly attached to a corresponding blade 120. Connecting rods 24 ensure the connection of the portions 260 of the gate operating ring 26 with the control levers 22 of the guide blades 120. The connecting rods 24 are articulated at their two extremities around axes Y22 and Y24. These axes Y22 and Y24 are usually parallel to swiveling axis Y120 of the guide blades 120, but may be concurrent to the center of the distributor 12.

The longitudinal directions of the control lever 22 and of the connecting rod 24 are not contained in the plane of figure 2. That is why the lever 22 and the rod 24 are represented cut lengthwise on figure 2.

In practice, a rotation of about 15° of the gate operating ring 26 around the axes X26 allows pivoting the guide blades 120 over about 85° around their respective axes Y120.

As shown on figure 3, the gate operating ring 26 is operated using two servomotors 30 and 36 and a counterweight 28.

In the present document, a servomotor is a jack, preferably a hydraulic jack. The servomotors 30 and 36 are able to resist to a static effort that is equal to the weight of the counterweight 28 and the hydraulic tendency to close.

The gate operating ring 26 includes a crank 262 on which act the counterweight 28 and the servomotors 30 and 36. The servomotors 30 and 36 are linked to the crank 262 by means of a connecting rod 32. The connecting rod 32 is articulated at its two extremities around two axes X322 and X324 parallel to the axis X26 of rotation of the gate operating ring 26.

In the present document, the directions "upwards" and "downwards" have to be interpreted with regards to the configuration of figures 1 to 4.

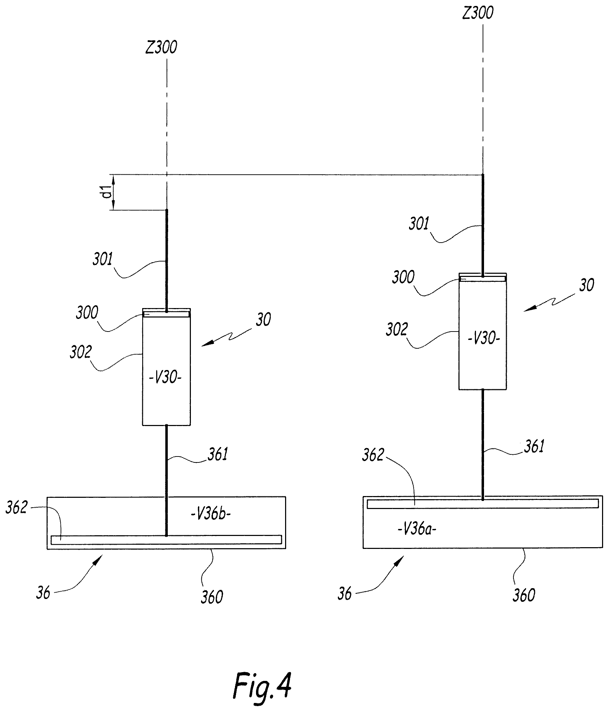

As shown on figures 3 and 4, the servomotors 30 and 36 are arranged successively along a vertical axis Z300. The servomotor 30 is disposed above the servomotor 36. The servomotor 30 includes a body 302 within which a piston 300 is disposed. The piston 300 can be moved along axis Z300 under the pressure of a thrust chamber V30 delimited by the body 302. In practice, the thrust chamber V30 is pressurized with oil. The piston 300 is secured to a piston stem 301 that extends upwards and that is linked to a lower extremity of the connecting rod 32, which is the extremity articulated around axis X322.

The pressure at which oil is injected in the chamber V30 is regulated by a non-represented regulation unit. This regulation unit adapts the pressure of oil injected in chamber V30 as a function of unit operation conditions. More precisely, the oil injection pressure in the thrust chamber V30 of the first servomotor 30 is electronically controlled, so as to let the unit supply the power requested by the grid regardless of the water head. This rotation speed depends on the frequency of the voltage to be delivered.

The regulation unit is electronically controlled and collects the pressure values upstream and downstream of the turbine 6 by means of sensors. In this way, the regulation unit can deduct the water head by calculating the difference of pressure ΔP between the pressure P1 measured upstream of the turbine 6 and the pressure P2 measured downstream of the turbine 6.

In operation, the piston 300 and the piston stem 301 are pushed upwards by pressurization of chamber V30 to pivot the gate operating ring 26 around the axis X26. More precisely, a displacement F1 of the piston stem 301 upwards implies the gate operating ring 26 to be pivoted in clockwise direction in the section of figure 3, as represented by the arrow R1. Conversely, the counterweight 28 applies an effort F2 that tends to pivot the gate operating ring 26 in counter-clockwise direction in the section of figure 3, as represented by the arrow R2. The regulation unit pilots the servomotor 30 to adjust the orientation of the guide blades 120.

The servomotor 30 has a limited opening range, which means that the piston 300 cannot be pushed further to a certain limit. Indeed, as shown figure 4, the displacement of the piston 300 is limited by the upper wall of the body 302. As a result, the servomotor 30 cannot open the guide blades 120 further to a predetermined position, which corresponds to about 80% of the maximal opening of the guide blades 120.

In operation, water flow F circulating through the turbine 6 applies a momentum M1 on each guide blade 120. In function of the degree of openness of the guide blades 120, this momentum M1 helps opening or closing the guide blades 120. More precisely, there is a barrier at which the momentum M1 changes direction. When the guide blades 120 are opened further to this barrier, the momentum is opposed to closing the guide blades 120. The degree of openness of the guide blades 120 at the predetermined position is below or equal to that of the barrier at which the momentum M1 during runaway becomes higher than the maximum opening torque obtained during normal operation.

The servomotor 36 includes a body 360 that is fixedly attached to the concrete structure 4 and a piston 362 that is movable along axis Z300 inside the body 360. The piston 362 is secured to a piston stem 361 that extends upwards outside of the body 360. The piston stem 361 is integral in translation with the body 302 of the servomotor 30. For instance, the piston stem 361 and the body 302 may be one piece. The servomotor 36 includes a lower chamber V36a and an upper chamber V36b that are disposed on both sides of the piston 362.

The servomotor 36 is piloted by the water head, that is by the difference of pressure ΔP between the pressure P1 upstream of the turbine and the pressure P2 downstream of the turbine 6. In opposition to the servomotor 30, which is electronically controlled, the servomotor 36 is mechanically piloted. Therefore, the servomotor 36 does not regulate the flow rate so as to get a precise rotation speed of the runner 14. The servomotor 36 is configured to open the guide blades 120 further to the predetermined position when the difference of pressure ΔP falls below a certain value, which is when the water fall is very low. Typically, water fall is very low during flood periods where the level of water downstream of the turbine 6 is substantially equal to the level of water upstream of the turbine 6.

In practice, the lower chamber V36a, which is a thrust chamber, is supplied with oil at a pressure depending on the difference of pressure ΔP. To this end, a non-represented controller pilots the pressure at which oil is injected in chamber V36a. In particular, the controller increases the pressure of oil injected in the lower chamber V36a when the difference of pressure ΔP diminishes under the certain value. The pressurization of chamber V36a involves the servomotor 30 to be moved upwards. Consequently, the piston stem 301 moves also upwards along axis Z300 and there is an over-travel d1 between the maximum upward position of piston 300 when servomotor 36 is not actuated and when chamber V36a is pressurized, as shown on figure 4. The over-travel d1 corresponds in practice to 20% of the maximum displacement of the piston stem 301 relative to the concrete structure 4.

In case of medium or high water fall, that is by example between 8 m and 16 m, the guide blades 120 are piloted only by the first servomotor 30. Indeed, it is not necessary to open the guide blades 120 further to the predetermined position because the difference of water pressure ΔP is sufficient to operate the turbine 6.

However, in case of low water fall that is by example between 4 m and 8 m the difference of pressure upstream and downstream of the turbine is low and it is necessary to increase the flow rate so as to keep an optimal yield. To this end, the guide blades 120 are opened further to the predetermined position by means of the servomotor 36.

If the turbine 6 is accidently disconnected from the main electrical grid, the turbine 6 might then go to an "overspeeding" configuration and it is imperative to shut down the circulation of water. To this end, the distributor 12 must be closed.

In high water fall conditions, the degree of openness of the guide blades 120 is necessarily below the predetermined value because the servomotor 30 has a limited opening range and the servomotor 36 is inactive. Consequently, a light counterweight effort is needed to close the distributor 12 in case of "overspeeding" since water flow F helps closing it. Moreover, a malfunctioning or a biased measure of one of the control system cannot lead to orient the guide blades 120 in dangerous zones wherein it is hard to close the distributor 12.

In low water fall conditions, the guide blades 120 are opened further to the predetermined position but this over-travel is mechanically controlled by the water head thanks to the servomotor 36. This means that the guide blades 120 are moved further to the predetermined position only in case of a low pressure difference ΔP. Therefore, the momentum M1 of the water flow F is relatively low. Even if the water flow tends to open further the guide blades 120, a light counterweight effort is needed to overcome the momentum M1 and close the distributor 12.

The addition of the servomotor 36 allows reducing strongly the counterweight effort to apply in case of "overspeeding". Accordingly, the servomotors 30 and 36 are less powerful than servomotors used in prior art installations since the efforts they have to develop to counterbalance the weight of the counterweight 28 are less important.

In a non-represented alternative embodiment, the lower chamber V36a of the servomotor 36 is supplied with water extracted downstream of the turbine 6 while the upper chamber V36b is empty. Indeed, the reduction of the water head is often due to an increase of the level of water downstream of the turbine, which corresponds to an increase of the downstream pressure. That is why the build-up of the downstream pressure is used to actuate the servomotor 36. The servomotor 36 also includes means to oppose the displacement of the piston 362 upwards while the pressure in chamber V36a does not exceed a threshold value. Therefore, the servomotor 36 does not open the blades 120 further to the predetermined position while the water head does not drop below a certain value and the dangerous zones, where the momentum M1 of the water flow F acts against the closing movement of the guide blades 120, are reached only in low water fall conditions. The means to oppose the displacement of the piston 362 are disposed in chamber V36b and may include a spring or any other elastic element.

In another non-represented alternative embodiment, the lower chamber V36a of the servomotor 36 is supplied with water extracted downstream of the turbine 6 while the upper chamber V36b is supplied with water extracted upstream of the turbine 6. Besides, the servomotor 36 includes means for pushing the piston 362 that are sized to push it so as to open the guide blades 120 further to the predetermined position when the difference of pressure ΔP falls below the certain value. The means for pushing the piston 362 of the second servomotor 36 may include a spring or any other elastic element.

In another non-represented alternative embodiment, this invention may be implemented on a Kaplan turbine or a propeller type turbine.

In another non-represented alternative embodiment, the runner of the turbine is coupled to a power shaft for operating any mechanical device, thereby converting hydraulic energy into mechanical energy.

The technical features of the different embodiments and alternative embodiments of the invention described here-above can be combined together to generate new embodiments of the invention.

## Claims

1. Hydraulic machine (6), comprising:
- a runner (14), adapted to rotate under the height of a water fall,
- a distributor (12) with adjustable guide blades (120),
- a gate operating ring (26) coupled to each blade (120) such to swivel the guide blades (120) all at the same time;
- a first electronically piloted servomotor (30) adapted to operate said gate operating ring (26) to open the guide blades (120),
***characterized in that***:
- the first servomotor (30) is not able to open the guide blades (120) further to a predetermined position, and
- it includes a second servomotor (36), which is mechanically piloted by the height of the water fall and which is adapted to operate said gate operating ring (26) to open the guide blades further to said predetermined position when a difference of pressure (ΔP) between a pressure (P₁) upstream of the hydraulic machine (6) and a pressure (P₂) downstream of the hydraulic machine (6) falls below a certain value.

2. Hydraulic machine (6) according to claim 1, **characterized in that** the second servomotor (36) is supplied with water extracted upstream and downstream of the hydraulic machine.

3. Hydraulic machine (6) according to claim 1, **characterized in that** the second servomotor (36) is operated with oil injection, at a pressure depending on the pressure difference (ΔP) between the pressure (P1) upstream and the pressure (P2) downstream of the hydraulic machine.

4. Hydraulic machine (6) according to any one of the previous claims, **characterized in that** the first and the second servomotor (30, 36) are hydraulic jacks.

5. Hydraulic machine (6) according to claim 4, **characterized in that** the first servomotor (30) is arranged above the second servomotor (36) and **in that** the first servomotor (30) includes a piston body (302) that is integral in translation with a piston (362) of the second servomotor (36).

6. Hydraulic machine (6) according to claim 4 or 5, **characterized in that** the second servomotor (36) includes a chamber (V36a), that is supplied with oil at a pressure depending on the pressure difference (ΔP) between the pressure (P1) upstream of the hydraulic machine and the pressure (P2) downstream of the hydraulic machine.

7. Hydraulic machine (6) according to claim 6, **characterized in that** it includes a controller, adapted to increase the pressure of oil injected in the chamber (V36a) of the second servomotor (36) when the pressure difference (ΔP) between the pressure (P1) upstream of the hydraulic machine and the pressure (P2) downstream of the hydraulic machine falls below a certain value.

8. Hydraulic machine (6) according to claim 4 or 5, **characterized in that** the second servomotor (36) includes a first chamber (V36a) and an second chamber (V36b) and **in that** the first chamber is supplied with water extracted downstream of the hydraulic machine (6) while the second chamber is supplied with water extracted upstream of the hydraulic machine (6).

9. Hydraulic machine (6) according to claim 8, **characterized in that** the second servomotor (36) includes means for pushing its piston (362), that are sized to push the piston (362) and open the guide blades (120) further to said predetermined position when the pressure difference (ΔP) between the pressure (P1) upstream of the hydraulic machine and the pressure (P2) downstream of the hydraulic machine falls below a certain value.

10. Hydraulic machine (6) according to claim 9, **characterized in that** the means for pushing the piston (362) of the second servomotor (36) include a spring.

11. Hydraulic machine (6) according to any one of the previous claims, **characterized in that** the degree of openness of the guide blades (120) at said predetermined position is below or equal to that of a position at which the momentum (M1) applied by water on the guide blades (120) during runaway becomes higher than the maximum opening torque obtained during normal operation.

12. Hydraulic machine (6) according to any one of the previous claims, **characterized in that** it includes a counterweight (28) which acts on said gate operating ring (26) for closing the guide blades (120).

13. Installation (2) for converting hydraulic energy into mechanical or electrical energy, **characterized in that** it includes a hydraulic machine (6) according to any one of the previous claims.

## Patentansprüche

1. Hydraulische Maschine (6), umfassend:
- einen Läufer (14), der dazu ausgelegt ist, unter der Höhe eines Wasserfalls zu rotieren,
- einen Verteiler (12) mit einstellbaren Führungsschaufeln (120),
- einen Gatebetriebsring (26), der mit jeder Schaufel (120) derart gekoppelt ist, dass die Führungsschaufeln (120) alle zur gleichen Zeit geschwenkt werden;
- einen ersten elektronisch gesteuerten Servomotor (30), der dazu ausgelegt ist, den Gatebetriebsring (26) zum Öffnen der Führungsschaufeln (120) zu betreiben,
**dadurch gekennzeichnet, dass**:
- der erste Servomotor (30) nicht in der Lage ist, die Führungsschaufeln (120) weiter zu einer vorbestimmten Position zu öffnen, und
- sie einen zweiten Servomotor (36) umfasst, der mechanisch durch die Höhe des Wasserfalls gesteuert wird, und der dazu ausgelegt ist, den Gatebetriebsring (26) zum Öffnen der Führungsschaufeln weiter als die vorbestimmte Position zu betreiben, wenn eine Druckdifferenz (ΔP) zwischen einem Druck (P₁) stromaufwärts der hydraulischen Maschine (6) und einem Druck (P₂) stromabwärts der hydraulischen Maschine (6) unter einen bestimmten Wert fällt.

2. Hydraulische Maschine (6) nach Anspruch 1, **dadurch gekennzeichnet, dass** der zweite Servomotor (36) mit Wasser versorgt wird, das stromaufwärts und stromabwärts der hydraulischen Maschine extrahiert wird.

3. Hydraulische Maschine (6) nach Anspruch 1, **dadurch gekennzeichnet, dass** der zweite Servomotor (36) mit Ölinjektion bei einem Druck betrieben wird, der von der Druckdifferenz (ΔP) zwischen dem Druck (P₁) stromaufwärts und dem Druck (P₂) stromabwärts der hydraulischen Maschine abhängt.

4. Hydraulische Maschine (6) nach einem der vorhergehenden Ansprüche, **dadurch gekennzeichnet, dass** der erste und der zweite Servomotor (30, 36) hydraulische Heber sind.

5. Hydraulische Maschine (6) nach Anspruch 4, **dadurch gekennzeichnet, dass** der erste Servomotor (30) über dem zweiten Servomotor (36) angeordnet ist, und dass der erste Servomotor (30) einen Kolbenkörper (302) umfasst, der integral in Translation mit einem Kolben (362) des zweiten Servomotors (36) ist.

6. Hydraulische Maschine (6) nach Anspruch 4 oder 5, **dadurch gekennzeichnet, dass** der zweite Servomotor (36) eine Kammer (V36a) umfasst, die mit Öl bei einem Druck versorgt wird, der von der Druckdifferenz (ΔP) zwischen dem Druck (P₁) stromaufwärts der hydraulischen Maschine und dem Druck (P₂) stromabwärts der hydraulischen Maschine abhängt.

7. Hydraulische Maschine (6) nach Anspruch 6, **dadurch gekennzeichnet, dass** sie einen Controller umfasst, der dazu ausgelegt ist, den Druck von Öl zu erhöhen, das in die Kammer (V36a) des zweiten Servomotors (36) injiziert wird, wenn die Druckdifferenz (ΔP) zwischen dem Druck (P₁) stromaufwärts der hydraulischen Maschine und dem Druck (P₂) stromabwärts der hydraulischen Maschine unter einen bestimmten Wert fällt.

8. Hydraulische Maschine (6) nach Anspruch 4 oder 5, **dadurch gekennzeichnet, dass** der zweite Servomotor (36) eine erste Kammer (V36a) und eine zweite Kammer (V36b) umfasst, und dass die erste Kammer mit Wasser versorgt wird, das stromabwärts der hydraulischen Maschine (6) extrahiert wird, während die zweite Kammer mit Wasser versorgt wird, das stromaufwärts der hydraulischen Maschine (6) extrahiert wird.

9. Hydraulische Maschine (6) nach Anspruch 8, **dadurch gekennzeichnet, dass** der zweite Servomotor (36) Mittel zum Drücken seines Kolbens (362) umfasst, die dazu dimensioniert sind, den Kolben (362) zu drücken und die Führungsschaufeln (120) weiter zu der vorbestimmten Position zu öffnen, wenn die Druckdifferenz (ΔP) zwischen dem Druck (P₁) stromaufwärts der hydraulischen Maschine und dem Druck (P₂) stromabwärts der hydraulischen Maschine unter einen bestimmten Wert fällt.

10. Hydraulische Maschine (6) nach Anspruch 9, **dadurch gekennzeichnet, dass** die Mittel zum Drücken des Kolbens (362) des zweiten Servomotors (36) eine Feder umfassen.

11. Hydraulische Maschine (6) nach einem der vorhergehenden Ansprüche, **dadurch gekennzeichnet, dass** der Öffnungsgrad der Führungsschaufeln (120) bei der vorbestimmten Position kleiner oder gleich jenem einer Position ist, bei der das Moment (M1), das durch Wasser auf die Führungsschaufeln (120) während eines Durchgehens ausgeübt wird, größer wird als das maximale Öffnungsdrehmoment, das während eines normalen Betriebs erreicht wird.

12. Hydraulische Maschine (6) nach einem der vorhergehenden Ansprüche, **dadurch gekennzeichnet, dass** sie ein Gegengewicht (28) umfasst, das auf den Gatebetriebsring (26) zum Schließen der Führungsschaufeln (120) wirkt.

13. Anlage (2) zum Umwandeln von hydraulischer Energie in mechanische oder elektrische Energie, **dadurch gekennzeichnet, dass** sie eine hydraulische Maschine (6) nach einem der vorhergehenden Ansprüche umfasst.

## Revendications

1. Machine hydraulique (6), comprenant :
- une roue (14), adaptée pour tourner sous le poids d'une chute d'eau,
- un distributeur (12) avec des aubes de guidage réglables (120),
- un cercle de vannage (26) accouplé à chaque aube (120) de façon à faire pivoter les aubes de guidage (120) toutes en même temps ;
- un premier servomoteur piloté électroniquement (30) adapté pour actionner ledit cercle de vannage (26) pour ouvrir les aubes de guidage (120),
**caractérisée en ce que** :
- le premier servomoteur (30) n'est pas capable d'ouvrir les aubes de guidage (120) davantage à une position prédéterminée, et
- elle comporte un deuxième servomoteur (36), qui est piloté mécaniquement par la hauteur de la chute d'eau et qui est adapté pour actionner ledit cercle de vannage (26) pour ouvrir les aubes de guidage davantage à ladite position prédéterminée lorsqu'une différence de pression (ΔP) entre une pression (P₁) en amont de la machine hydraulique (6) et une pression (P₂) en aval de la machine hydraulique (6) descend en dessous d'une certaine valeur.

2. Machine hydraulique (6) selon la revendication 1, **caractérisée en ce que** le deuxième servomoteur (36) est alimenté en eau extraite en amont et en aval de la machine hydraulique.

3. Machine hydraulique (6) selon la revendication 1, **caractérisée en ce que** le deuxième servomoteur (36) est actionné avec une injection d'huile, à une pression dépendant de la différence de pression (ΔP) entre la pression (P1) en amont et la pression (P2) en aval de la machine hydraulique.

4. Machine hydraulique (6) selon l'une quelconque des revendications précédentes, **caractérisée en ce que** les premier et deuxième servomoteurs (30, 36) sont des vérins hydrauliques.

5. Machine hydraulique (6) selon la revendication 4, **caractérisée en ce que** le premier servomoteur (30) est agencé au-dessus du deuxième servomoteur (36) et **en ce que** le premier servomoteur (30) comprend un corps de piston (302) qui est d'un seul bloc en translation avec un piston (362) du deuxième servomoteur (36).

6. Machine hydraulique (6) selon la revendication 4 ou 5, **caractérisée en ce que** le deuxième servomoteur (36) comprend une chambre (V36a), qui est alimentée en huile à une pression dépendant de la différence de pression (ΔP) entre la pression (P1) en amont de la machine hydraulique et la pression (P2) en aval de la machine hydraulique.

7. Machine hydraulique (6) selon la revendication 6, **caractérisée en ce qu'**elle comprend un dispositif de commande, adapté pour augmenter la pression d'huile injectée dans la chambre (V36a) du deuxième servomoteur (36) lorsque la différence de pression (ΔP) entre la pression (P1) en amont de la machine hydraulique et la pression (P2) en aval de la machine hydraulique descend en dessous d'une certaine valeur.

8. Machine hydraulique (6) selon la revendication 4 ou 5, **caractérisée en ce que** le deuxième servomoteur (36) comprend une première chambre (V36a) et une deuxième chambre (V36b) et **en ce que** la première chambre est alimentée en eau extraite en aval de la machine hydraulique (6) tandis que la deuxième chambre est alimentée en eau extraite en amont de la machine hydraulique (6).

9. Machine hydraulique (6) selon la revendication 8, **caractérisée en ce que** le deuxième servomoteur (36) comprend des moyens pour pousser son piston (362), qui sont dimensionnés pour pousser le piston (362) et ouvrir les aubes de guidage (120) davantage à ladite position prédéterminée lorsque la différence de pression (ΔP) entre la pression (P1) en amont de la machine hydraulique et la pression (P2) en aval de la machine hydraulique descend en dessous d'une certaine valeur.

10. Machine hydraulique (6) selon la revendication 9, **caractérisée en ce que** les moyens pour pousser le piston (362) du deuxième servomoteur (36) comprennent un ressort.

11. Machine hydraulique (6) selon l'une quelconque des revendications précédentes, **caractérisée en ce que** le degré d'ouverture des aubes de guidage (120) à ladite position prédéterminée est inférieur ou égal à celui d'une position à laquelle la quantité de mouvement (M1) appliquée par l'eau sur les aubes de guidage (120) pendant un emballement devient plus élevée que le couple d'ouverture maximal obtenu pendant un fonctionnement normal.

12. Machine hydraulique (6) selon l'une quelconque des revendications précédentes, **caractérisée en ce qu'**elle comprend un contrepoids (28) qui agit sur ledit cercle de vannage (26) pour fermer les aubes de guidage (120).

13. Installation (2) pour convertir une énergie hydraulique en énergie mécanique ou électrique, **caractérisée en ce qu'**elle comprend une machine hydraulique (6) selon l'une quelconque des revendications précédentes.
